# EUROPÄISCHE PATENTSCHRIFT

(11) **EP 1 454 871 B1**
(45) Veröffentlichungstag und Bekanntmachung des Hinweises auf die Patenterteilung: **16.05.2007**
(21) Anmeldenummer: 04004774.8
(22) Anmeldetag: 02.03.2004
(51) Int. Cl.: B66C 23/36

(54) **Lastenheber für ein KFZ**
Hoist for a vehicle
Monte-charge pour véhicule

(30) Priorität: 07.03.2003 DE 10310976
(43) Veröffentlichungstag der Anmeldung: 08.09.2004
(73) Patentinhaber: Knöll, Herbert, D-71546 Aspach (DE)
(72) Erfinder: Knöll, Herbert, D-71546 Aspach (DE)
(74) Vertreter: Schöndorf, Jürgen

(56) Entgegenhaltungen:
- DE-C- 621 037
- DE-C- 751 773
- GB-A- 311 984
- GB-A- 800 075
- US-A- 3 341 038

## Beschreibung

Die Erfindung betrifft eine Einrichtung zum Einbringen von Lasten in mit einer Ladefläche versehene Kraftfahrzeuge, beispielsweise Kombis, Kleintransporter, Pickups oder Pritschenwagen.

Bei solchen für kleinere Transporte verwendeten Kraftfahrzeugen werden häufig Lasten in den Transporter eingeladen und später wieder aus ihnen herausgenommen. Selbst wenn das Beladen an einer Stelle geschieht, wo fest installierte Beladeeinrichtungen vorhanden sind, so muss das Entladen häufig an Stellen geschehen, wo keine derartigen ortsfesten Einrichtungen zur Verfügung stehen. Dort besteht die Notwendigkeit, dass der Fahrer zum Teil auch unter Zeitdruck Gegenstände aus dem Kfz entnehmen muss, die häufig auch ein Gewicht haben, das sich nur schwer ohne Hilfe bewegen lässt. Umgekehrt kann es auch erforderlich sein, an solchen Stellen einzelne Gegenstände in das Kraftfahrzeug einzuladen. Selbst wenn die Gegenstände ein Gewicht haben, das der Fahrer nach tragen könnte, so kann auf Grund der Vielzahl von solchen Vorgängen die Arbeit einer Person nicht mehr zumutbar sein.

Es ist bereits eine Hebevorrichtung für einen offenen Lastwagen bekannt (GB 800075), bei der ein U-förmiger Bügel im Bereich der Enden seiner beiden Schenkel gelagert ist. Zum Auf und Abbewegen des Bügels wird eine Hydraulikzylinder oder ein an dem Bügel im Bereich seiner Lagerung angreifendes Zahnradgetriebe verwendet.

Der Erfindung liegt die Aufgabe zu Grunde, eine Möglichkeit zu schaffen, in solchen Fällen das leichte Be- und/oder Entladen von Kraftfahrzeugen, Kleintransportern oder dergleichen für die betreffende Person leichter zu gestalten.

Zur Lösung dieser Aufgabe schlägt die Erfindung einen Lastenheber mit den im Anspruch 1 genannten Merkmalen vor. Weiterbildungen der Erfindung sind Gegenstand von Unteransprüchen.

Der Lastenheber, wie er von der Erfindung vorgeschlagen wird, wird in einem Kfz montiert. Der Lastbügel ist um eine durch eine Welle, gebildete Drehachse so verschwenkbar gelagert, dass er von der einen auf die andere Seite der Drehachse über diese Drehachse hinüber verschwenkt werden kann. Die Verschwenkung geschieht gegenüber einem Gegenlager, das fest in dem Kfz angeordnet ist. Bei einem Kfz, das einen sehr stabilen Aufbau aufweist, kann das Gegenlager beispielsweise direkt an einer oberen Querstrebe angebracht sein. Zur Verschwenkung des Lastbügels gegenüber dem Gegenlager dient ein Getriebe. Dieses Getriebe kann von dem Bediener des Lastenhebers von Hand betätigt werden, oder es kann unter Umständen auch einen von der Batterie des Kraftfahrzeugs gespeisten elektrischen Antrieb aufweisen.

In Weiterbildung der Erfindung ist vorgesehen, dass das Gegenlager im wesentlichen senkrecht oberhalb der Achse des Bügels und bei senkrecht stehenden Bügel oberhalb des Bügels angeordnet ist. Dadurch wird es möglich, ein Getriebe zu verwenden, das im wesentlichen auf Zug beansprucht wird.

In nochmaliger Weiterbildung der Erfindung kann vorgesehen sein, dass es sich bei der Getriebeverbindung zwischen dem Lastbügel und dem Gegenlager um einen Flaschenzug handelt. Der Flaschenzug besteht aus sehr einfachen, leicht handzuhabenden und auch leicht zu wartenden Teilen. Die Rollen lassen sich sehr einfach mit geringer Reibung lagern, so dass das Getriebe sehr leichtgängig ist. Auch lässt sich die Untersetzung so einstellen, dass für die jeweiligen Gewichte gerade der richtige Aufwand einstellbar ist. Es gibt sehr einfach wirkende Sperren, die das Absenken der Last verhindern, wenn der Benutzer nicht mehr zieht oder das Seil des Flaschenzugs los lässt. Damit ist auch eine große Sicherheit des Lastenhebers gegeben.

Um die Ladefläche gut ausnutzen zu können, kann erfindungsgemäß vorgesehen sein, dass die Drehachse unmittelbar oberhalb der Ladefläche des Kraftfahrzeugs angeordnet wird, damit auch der in der Höhe zur Verfügung stehende Raum durch den Lastbügel maximal ausgenutzt werden kann. Denn die Länge des Lastbügels von der Drehachse bis zur Aufhängeeinrichtung bestimmt den maximalen Verschwenkweg des Lastenhebers. Der Lastbügel selbst muss aber ja bei einem geschlossenen Kfz vollständig in dem Kfz angeordnet werden können.

Da viele Kraftfahrzeuge keine für das Aufhängen von Lasten ausreichende Stabilität ihrer Dachkonstruktion haben, schlägt die Erfindung in Weiterbildung vor, in dem Kraftfahrzeug einen äußeren Bügel anzuordnen, an dem das Gegenlager befestigt ist. Dieser Bügel kann dann auch dazu dienen, in seinem unteren Bereich das die Drehachse des Lastbügels bildende Lager aufzunehmen. Der Lastbügel wird so dimensioniert, dass er mit geringem Abstand unter dem Gegenlagerbügel hindurch geschenkt werden kann.

Erfindungsgemäß kann vorgesehen sein, dass die Achse des Lastbügels im Bereich des hinteren Endes der Ladefläche des Kraftfahrzeugs angeordnet ist. Falls es sich um einen Pickup oder ein sonstiges für härteren Einsatz bestimmtes Kraftfahrzeug handelt, kann unter Umständen die Drehachse auch hinter der Ladefläche auf einer Stoßstangenkonstruktion angebracht sein.

Die Aufhängeeinrichtung, beispielsweise ein einfacher Haken, kann so an dem oberen Quersteg des Lastbügels angeordnet werden, dass die Last an beliebigen Stellen dieser Querstrebe angebracht werden kann.

Weitere Merkmale, Einzelheiten und Vorzüge der Erfindung ergeben sich aus der folgenden Beschreibung einer bevorzugten Ausführungsform, den Patentansprüchen und der Zusammenfassung, deren beider Wortlaut durch Bezugnahme zum Inhalt der Beschreibung gemacht wird, sowie anhand der Zeichnung. Hierbei zeigen:
- Figur 1: eine schematische Ansicht eines in einem Kastenwagen angeordneten Lastenhebers nach der Erfindung;
- Figur 2: die Seitenansicht des Lastenhebers mit im Kfz abgesenkter Last;
- Figur 3: die Seitenansicht in dem Zustand des Absetzens bzw.
Aufnehmens einer Last.

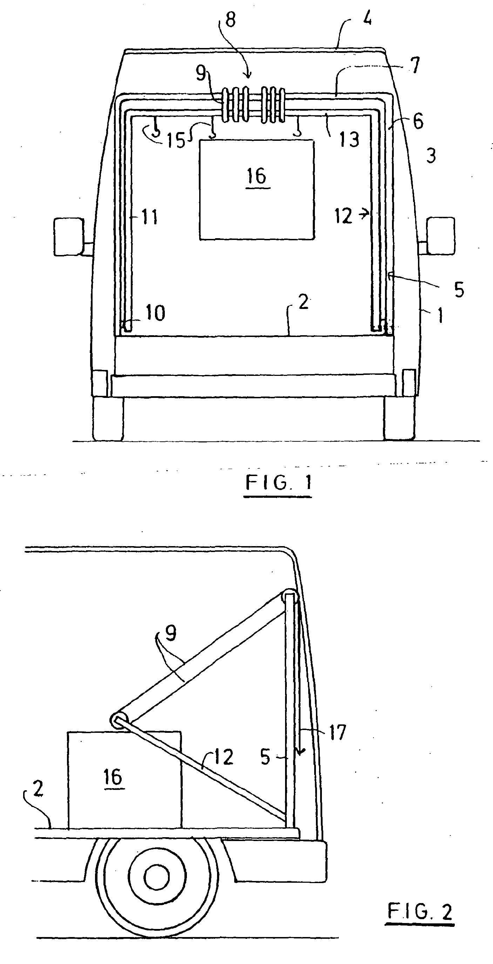

Figur 1 zeigt vereinfacht die Ansicht eines Kastenwagens 1 von seiner Rückseite her mit geöffneten Türen. Das Kfz enthält eine Ebene Ladefläche 2, begrenzt von Seitenwänden 3 und einem Dach fiel. Die Seitenwände 3 und das Dach 4 sind im Allgemeinen nicht ausreichend stabil, um eine Last anzuhängen.

Auf der Ladefläche stehend ist an den seitlichen Begrenzungen der Ladefläche 2 ein äußerer Bügel 5 befestigt, beispielsweise festgeschraubt, festgeschweißt oder in ähnlicher Weise an der Tragkonstruktion des Kraftfahrzeugs befestigt. Dieser äußere Bügel enthält zwei im wesentlichen senkrecht angeordnete Arme 6, die im Bereich ihrer oberen Enden durch eine horizontale Querstrebe 7 miteinander verbunden sind. Das Material dieses Bügels 5 ist ein Profil, dass die ausreichende Stabilität aufweist.

In der Mitte der oberen Querstrebe 7 ist ein Gegenlager 8 angeordnet, bei dem es sich um einen Satz von Rollen für einen Flaschenzug 9 handelt.

Im Bereich der unteren Enden der äußeren Arme 6 des Bügels 5 ist jeweils ein Lager 10 mit einer Drehachse angebracht, an der die unteren Enden der Arme 11 eines zweiten Bügels 12 drehbar gelagert sind. Der zweite Bügel 12 ist also um die Achse 10 verdrehbar. Die wirksame Länge des Bügels 12 von seiner Achse 10 bis zu seiner Querstrebe 13 ist etwas kleiner als die entsprechende Abmessung des äußeren Bügels 5, so dass der Lastbügel 12 unter dem Gegenlagerbügel 5 hindurch verschwenkt werden kann.

An der -oberen Querstrebe 13 des Lastbügels 12 sind im dargestellten Beispiel mehrere Haken 15 angebracht, die eine Aufhängeeinrichtung bilden. Schematisch ist dargestellt, dass an den beiden mittleren Haken 15 eine Last 16 aufgehängt werden kann. Die Haken 15 können über die gesamte Länge der Querstrebe 13 angebracht sein. Damit kann eine Last 16 sowohl links als auch rechts als auch in der Mitte aufgehängt werden. Es ist natürlich auch denkbar, dass die Haken verschiebbar in der Querstrebe 13 angebracht sind.

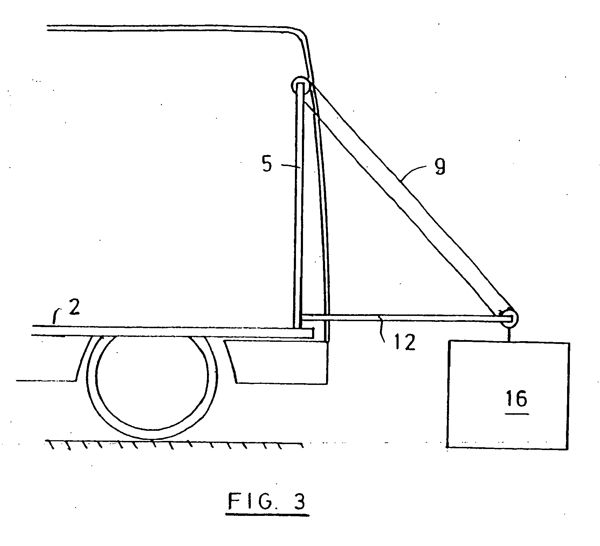

Nun zu Figur 2. Aus der Position der Figur 1, in der der Lastbügel 12 senkrecht steht, ist er jetzt ins Innere des Kfz hinein verschwenkt, bis die Haken 15 unmittelbar oberhalb der Last 16 angeordnet sind. In dieser Position kann jetzt die Last 16 mit Hilfe der Aufhängeeinrichtung an der Querstrebe 13 des Lastbügels 12 befestigt werden. Anschließend wird, angedeutet durch den Pfeil 17, an dem Flaschenzug gezogen. Dies führt dazu, dass der Lastbügel 12 sich aufrichtet, bis er senkrecht steht. Dann liegen die Drehachse 10 des Lastbügels 12 und die Querstrebe 7 des Gegenlagerbügels 5 direkt übereinander in einer senkrecht verlaufenden Linie. Nun muss der Benutzer des Lastenhebers die Last und den Bügel 12 mit geringem Kraftaufwand gerade etwas über diesen Punkt auf die andere Seite hinüber ziehen, worauf dann die Last 16 abgesenkt werden kann. Dies kann durch langsames Nachlassen an dem Seil des Flaschenzugs geschehen. Die Last 16 senkt sich dann durch entsprechende Verschwenkung des Lastbügels 12 auf die andere Seite ab, bis die Position der Figur 3 erreicht ist. Hier kann die Last 16 von der Aufhängeeinrichtung gelöst werden.

Die umgekehrte Vorgehensweise ist natürlich auch möglich.

Da die die Drehachse bildende Welle 10 im Bereich des hinteren Endes der Ladefläche 2 angeordnet ist, kann die Last 16 weit aus dem Kfz heraus gesetzt werden. Es ist sogar möglich, wenn die Achse etwas oberhalb der Ladefläche angeordnet ist, dass die Last auch auf eine Stelle abgesetzt werden kann, die etwas tiefer liegt als die Fläche, auf der das Kfz steht.

Die Erfindung kann auch dann Anwendung finden, wenn es sich bei dem Kfz um ein nicht geschlossenes Kfz handelt. Der äußere das Gegenlager 8 aufweisende Bügel 5 kann beispielsweise mit Streben gesichert sein.

## Patentansprüche

1. Lastenheber für ein Kraftfahrzeug mit
1.1 einem in dem Kraftfahrzeug anbringbaren Lastbügel (12), der
1.1.1 im Bereich seines unteren Endes um eine horizontale Achse (10) auf beide Seiten der Achse (10) verschwenkbar ist und
1.1.2 eine Aufhängeeinrichtung zum Aufhängen der Last (16) aufweist,
1.2 einem in bzw. an dem Kraftfahrzeug anordenbaren Gegenlager (8), sowie mit
1.3 einer Getriebeverbindung zwischen dem Lastbügel (12) und dem Gegenlager (8) mit einem Getriebe zur Verschwenkung des Lastbügels (12) gegenüber dem Gegenlager (8)
**dadurch gekennzeichnet, dass**
1.4 das Gegenlager im wesentlichen senkrecht oberhalb der Achse (10) des Lastbügels (12) und bei senkrecht stehendem Lastbügel (12) oberhalb des Bügels angeordnet ist, so dass
1.5 das Getriebe der Getriebeverbindung im wesentlichen auf Zug beansprucht wird.

2. Lastenheber nach Anspruch 1, bei dem die Getriebeverbindung einen Flaschenzug (9) aufweist.

3. Lastenheber nach Anspruch 2, bei dem der Flaschenzug (9) eine Sperre aufweist.

4. Lastenheber nach einem der vorhergehenden Ansprüche, bei dem die Drehachse (10) unmittelbar oberhalb einer Ladefläche (2) des Kraftfahrzeugs anordenbar ist.

5. Lastenheber nach einem der vorhergehenden Ansprüche, bei dem das Gegenlager (8) an einen Bügel (5) angeordnet ist, der in bzw. an dem Kraftfahrzeug befestigbar ist.

6. Lastenheber nach Anspruch 5, bei dem das die Achse bildende Lager (10) an dem Gegenlagerbügel (5) angeordnet ist.

7. Lastenheber nach einem der vorhergehenden Ansprüche, bei dem die Achse (10) im Bereich des hinteren Endes der Ladefläche (2) des Kraftfahrzeugs anordenbar ist.

8. Lastenheber nach einem der vorhergehenden Ansprüche, bei dem die Aufhängeeinrichtung an beliebigen Stellen des oberen Querstegs (7) des Lastbügels (12) angreifen kann.

## Claims

1. Hoist for a vehicle, with
1.1 a load-bearing hoop (12), which can be fitted in the motor vehicle,
1.1.1 can be pivoted in the region of its lower end about a horizontal axis (10) on both sides of the axis (10) and
1.1.2 has a suspension device for suspending the load (16),
1.2 a counterbearing (8) which can be arranged in or on the vehicle, and with
1.3 a geared connection between the load-bearing hoop (12) and the counterbearing (8), with a gear mechanism for pivoting the load-bearing hoop (12) in relation to the counterbearing (8),
**characterized in that**
1.4 the counterbearing is arranged essentially vertically above the axis (10) of the load-bearing hoop (12) and, when the load-bearing hoop (12) stands upright, is arranged above the hoop, and therefore
1.5 the gear mechanism of the geared connection is essentially subjected to a tensile stress.

2. Hoist according to Claim 1, wherein the geared connection has a block and tackle (9).

3. Hoist according to Claim 2, wherein the block and tackle (9) has a catch.

4. Hoist according to one of the preceding claims, wherein the axis of rotation (10) can be arranged directly above a loading surface (2) of the vehicle.

5. Hoist according to one of the preceding claims, wherein the counterbearing (8) is arranged on a hoop (5) which can be fastened in or to the vehicle.

6. Hoist according to Claim 5, wherein the bearing (10) forming the axis is arranged on the counterbearing hoop (5).

7. Hoist according to one of the preceding claims, wherein the axis (10) can be arranged in the region of the rear end of the loading surface (2) of the vehicle.

8. Hoist according to one of the preceding claims, wherein the suspension device can engage at any desired locations on the upper transverse web (7) of the load-bearing hoop (12).

## Revendications

1. Monte-charge pour véhicule, comprenant
1.1 une fourche porte-charge (12) pouvant être montée dans le véhicule, qui
1.1.1 dans la région de son extrémité inférieure, peut pivoter autour d'un axe horizontal (10) des deux côtés de l'axe (10) et
1.1.2 présente un dispositif de suspension pour suspendre la charge (16),
1.2 un contre-palier (8) pouvant être disposé dans ou sur le véhicule ainsi
1.3 qu'une liaison par engrenage entre la fourche porte-charge (12) et le contre-palier (8), avec un engrenage pour faire pivoter la fourche porte-charge (12) par rapport au contre-palier (8),
**caractérisé en ce que**
1.4 le contre-palier est disposé essentiellement verticalement au-dessus de l'axe (10) de la fourche porte-charge (12), et, lorsque la fourche porte-charge (12) est disposée verticalement, au-dessus de la fourche porte-charge, de sorte que
1.5 l'engrenage de la liaison par engrenage soit essentiellement sollicité en traction.

2. Monte-charge selon la revendication 1, dans lequel la liaison par engrenage présente une moufle (9).

3. Monte-charge selon la revendication 2, dans lequel la moufle (9) présente un verrouillage.

4. Monte-charge selon l'une quelconque des revendications précédentes, dans lequel l'axe de rotation (10) peut être disposé directement au-dessus d'une surface de charge (2) du véhicule.

5. Monte-charge selon l'une quelconque des revendications précédentes, dans lequel le contre-palier (8) est disposé sur une fourche (5) qui peut être fixé dans ou sur le véhicule.

6. Monte-charge selon la revendication 5, dans lequel le palier (10) formant l'axe est disposé sur la fourche (5) du contre-palier.

7. Monte-charge selon l'une quelconque des revendications précédentes, dans lequel l'axe (10) peut être disposé dans la région de l'extrémité arrière de la surface de charge (2) du véhicule.

8. Monte-charge selon l'une quelconque des revendications précédentes, dans lequel le dispositif de suspension peut venir en prise en des endroits quelconques de la traverse supérieure (7) de la fourche porte-charge (12).
